# EUROPEAN PATENT SPECIFICATION

(11) **EP 4 090 703 B1**
(45) Date of publication and mention of the grant of the patent: **23.04.2025**
(21) Application number: 21701055.2
(22) Date of filing: 12.01.2021
(51) Int. Cl.: C08F 297/04, C08K 5/00, C08K 5/105, C08K 5/134, C08K 5/3492, C08K 5/526, C08L 53/02

(54) **STYRENE BUTADIENE BLOCK COPOLYMERS WITH LOW CROSSLINKING**
STYROLBUTADIENBLOCKCOPOLYMERE MIT NIEDRIGER VERNETZUNG
COPOLYMÈRES SÉQUENCÉS DE STYRÈNE-BUTADIÈNE À FAIBLE RÉTICULATION

(30) Priority: 13.01.2020 EP 20151473
(43) Date of publication of application: 23.11.2022
(73) Proprietor: INEOS Styrolution Group GmbH, 60325 Frankfurt (DE)
(72) Inventor: VERSWYVEL, Michiel, 2800 Mechelen (BE)
(74) Representative: Jacobi, Markus Alexander
(86) International application number: PCT/EP2021/050462
(87) International publication number: WO 2021/144251

(56) References cited:
- EP-A1- 0 636 654
- WO-A1-2018/234222
- JP-A- S6 327 551
- RU-C1- 2 687 970
- DATABASE CA [online] CHEMICAL ABSTRACTS SERVICE, COLUMBUS, OHIO, US; 9 July 1988 (1988-07-09), SHIRAKI, TOSHINORI ET AL: "Block copolymers containing phenol derivative stabilizers", XP002802730, retrieved from STN Database accession no. 1988:407552

## Description

The invention relates to a thermoplastic polymer composition comprising vinylaromatic diene block copolymers, a process for its preparation, and the use thereof for the preparation of shrink films.

Vinyl aromatic diene block copolymers and in particular styrene butadiene block copolymers (SBC) have the tendency to crosslink under energy (i.e. heat and shear) exposure during processing (e.g. extrusion, heat exchangers and melt pumps). Specifically the diene monomer units are sensitive for crosslinking, more specifically the pendant double bonds of the 1,2-coupled diene units. Typically, the higher the amount of diene in the block copolymer, the higher the energy induced crosslinking. When still in polymer solution, the crosslinked block copolymer is typically not soluble anymore in the organic solvent due to the increased molar mass resulting from crosslinking.

Crosslinked block copolymers can cause fouling of the production (e.g. fouling of reactor, heat exchangers, static mixers, etc.) and processing (e.g. injection molding machines, extruders, melt filters, etc.) equipment by slow deposition over time and ultimately can lead to blocking of production and processing installations. When fragments of these cross-linked deposits are released from the production or processing installations via the polymer melt into molded (shaped) articles (e.g. pellets, films, sheets, or injection molded parts etc.) produced from the vinyl aromatic diene block copolymers, these crosslinked deposits appear as dimensional and optical defects - also known as 'fish eyes' or 'gels'-in the final material. This happens as the crosslinking creates a three dimensional structure that cannot be reshaped as a thermoplast. These said dimensional and optical defects are disliked by end customers in final transparent products (such as bottles, trays, boxes, films) and technical issues like the non-printability are also caused and thus the value of the material decreases.

Thus, low or no fish-eyes from crosslinked diene in the obtained block copolymers are a key quality requirement especially in the SBC shrink sleeve market.

EP 0636 654 A1 describes a color stable and heat resistant block copolymer composition for a hot melt adhesive comprising (a) a linear styrene-isoprene-styrene triblock copolymer and (b) 0.1 to 5 pbw of a stabilizer set comprising specific UV-stabilizers (I), and specific phosphite oxidants (II). Exemplified combinations (b) are commercial stabilizers Irgafos^{®} 168 (0.4 wt.-%) and Irganox^{®} 565 (0.09 wt.-%), and Irgafos^{®} 168 (0.4 wt.-%) and Sumilizer GM (0.09 wt.-%).

WO 2018/153808 discloses a polymer composition comprising a mixture of specific star shaped block copolymers A1 and A2 for the production of shrink films. The use of a stabilizer in amounts of 0.01 to 0.7 wt.-% is preferred. As stabilizers oxygen radical scavengers such as Irganox^{®} 1010, Songnox^{®} 1010, Irganox^{®} 1076, Irganox^{®} 565 and blends thereof, carbon radical scavengers such as Sumilizer^{®} GS, Sumilizer^{®} GM and blends thereof, and/or secondary stabilizers such as Irgafos^{®} 168 are mentioned. In the examples Irganox^{®} 1010 alone, or 0.2 wt.-% Sumilizer^{®} GS and 0.2 wt.-% Irganox^{®} 1010 are used.

The block copolymers comprised in said prior art compositions often have the afore-mentioned disadvantages in respect to crosslinking and the formation of fish-eyes.

One objective of the present invention is to provide block copolymers having low or preferably nearly no fish-eyes from crosslinked conjugated diene. A further objective is to provide a process for the preparation of block copolymers wherein crosslinking during production and post-production processing is reduced.

One aspect of the present invention is a thermoplastic polymer composition (I) comprising (or consisting of) components (A), (B), and optionally (C), (D) and/or (E):
(A) at least one block copolymer A comprising (consisting of):
   A1: 60 to 95 wt.-% - based on block copolymer A - polymerized units of at least one vinyl aromatic monomer, preferably styrene, and
   A2: 5 to 40 wt.-% - based on block copolymer A - polymerized units of at least one conjugated diene, preferably butadiene or isoprene;
(B) a stabilizer combination consisting of stabilizer components (B1), (B2) and (B3):
   B1: 1500 to 2100 ppm (0.150 to 0.210 wt.-%), - based on thermoplastic polymer composition (I) - 2,6-di-tert-butyl-4-(4,6-bis(octylthio)-1,3,5-triazin-2-ylamino) phenol (CAS number: 991-84-4),
   B2: 1000 to 1600 ppm (0.100 to 0.160 wt.-%) - based on thermoplastic polymer composition (I) - 2-[1-(2-hydroxy-3,5-di-tert-pentylphenyl)ethyl]-4,6-di-tert-pentylphenyl acrylate (CAS number: 123968-25-2) or 2-tert-butyl-6-(3-tert-butyl-2-hydroxy-5-methylbenzyl)-4-methylphenyl acrylate (CAS number: 61167-58-6) or mixtures thereof, and
   B3: 1000 to 1600 ppm (0.100 to 0.160 wt.-%) - based on thermoplastic polymer composition (I) - tris(2,4-di-tert.-butylphenyl)-phosphite (CAS number: 31570-04-4);
(C) 0 to 5000 ppm (0 to 0.500 wt.-%) - based on thermoplastic polymer composition (I) - of one or more stabilizers different from (B1), (B2) and (B3);
(D) optionally one or more additives and/or processing aids other than (B) and (C):
   (E) optionally at least one, preferably 1, 2 or 3, more preferably one, thermoplastic polymer TP other than block copolymer A.
'ppm' means 'parts per million (mg/kg)' based on the entire thermoplastic polymer composition (I).

'Butadiene' means 1,3-butadiene.

If optional component (D) is present, its minimum amount used is 0.01 wt.-%, based on the entire thermoplastic polymer composition (I). Generally component (D) can be used in amounts of from 0 to 6% by weight, based on the entire thermoplastic polymer composition (I), preferably 0.01 wt% to 3 wt% and more preferably 0.01 wt% to 1 wt%.

Component (C) can be used in a total amount of 0 to 5000 ppm (0 to 0.5 wt.-%), often 0 to 2000 ppm (0 to 0.20 wt.-%), or, 0 to 1750 ppm (0 to 0.175 wt.-%), or, 0 to 1500 ppm (0 to 0.15 wt.-%), more often 0 to 1100 ppm (0 to 0.11 wt.-%), based on the entire thermoplastic polymer composition (I). Preferably optional component (C) is not present.

Often optional component (C) is present - based on the entire thermoplastic polymer composition (I) - in a total amount of 500 to 2000 ppm (0.05 to 0.20 wt.-%), or, 500 to 1750 ppm (0.05 to 0.175 wt.-%), or, 500 to 1100 ppm (0.05 to 0.11 wt.-%), more often 750 to 2000 ppm (0.075 to 0.20 wt.-%), or, 750 to 1750 ppm (0.075 to 0.175 wt.-%), or, 750 to 1100 ppm (0.075 to 0.11 wt.-%), mostly 950 to 2000 ppm (0.095 to 0.20 wt.-%), or, 950 to 1750 ppm (0.095 to 0.175 wt.-%), or, 950 to 1050 ppm (0.095 to 0.105 wt.-%), in particular 950 to 1050 ppm (0.095 to 0.105 wt.-%). Often component (C) is only one stabilizer.

If optional component (E) is present, it is preferably used in a total amount of 0.5 to 85 wt.-%, preferably 1 to 75 wt.-% more preferably 1 to 55 wt.-%, based on the entire thermoplastic polymer composition (I).

Preferably the thermoplastic polymer composition (I) consists of components (A), (B), and optionally (C), (D) and/or (E).

More preferably, the thermoplastic polymer composition (I) consists of components (A), (B), and optionally (D) and/or (E).

More preferably the thermoplastic polymer composition (I) consists of components (A) and (B).

### Block copolymer A

Block copolymer A comprises (or consists of):
A1: 60 to 95 wt.-% - based on block copolymer A - polymerized units of at least one vinyl aromatic monomer, in particular styrene, and
A2: 5 to 40 wt.-%, based on block copolymer A - polymerized units, of at least one conjugated diene, in particular butadiene or isoprene.

Preferably block copolymer A comprises (consists of):
A1: 60 to 80 wt.-% - based on block copolymer A - polymerized units of at least one vinyl aromatic monomer, in particular styrene, and
A2: 20 to 40 wt.-% - based on block copolymer A - polymerized units of at least one conjugated diene, in particular butadiene or isoprene.

More preferably block copolymer A comprises (consists of):
A1: 60 to 76 wt.-% - based on block copolymer A - polymerized units of at least one vinyl aromatic monomer, in particular styrene, and
A2: 24 to 40 wt.-% - based on block copolymer A - polymerized units of at least one conjugated diene, in particular butadiene or isoprene.

More preferred block copolymer A comprises (consists of):
A1: 65 to 76 wt.-%, - based on block copolymer A - polymerized units of at least one vinyl aromatic monomer, in particular styrene, and
A2: 24 to 35 wt.-%, - based on block copolymer A - polymerized units of at least one conjugated diene, in particular butadiene or isoprene.

Generally block copolymer A is obtained by an anionic polymerization process. Preferably block copolymer A is obtained by an anionic polymerization process with 1, 2 or 3 initiation steps and sequential monomer addition and polymerization.

Block copolymer A can be a linear or star shaped block copolymer. The preparation of such block copolymers by sequential anionic polymerization is commonly known (cp. e.g. US 6,593,430, col. 3, I. 1 to col. 4, I. 45).

Generally suitable block copolymer A comprise at least one hard polymer block S composed of from 95 to 100 wt.-% of vinylaromatic monomers and of from 0 to 5 wt.-% of conjugated dienes, optionally one or more hard copolymer blocks (B/S) each composed of conjugated dienes and vinylaromatic monomers having a B/S-ratio (= diene/vinylaromatic monomer-ratio) < 0.25, preferably 0.1 to 0.2, more preferably 0.1 to 0.15, and a glass transition temperature Tg > 37 °C, and one or more soft blocks B composed of 100 wt.-% conjugated diene and/or one or more soft copolymer blocks (S/B) each composed of vinylaromatic monomers and of conjugated dienes having a S/B-ratio (= vinylaromatic monomer/diene-ratio) < 0.5, preferably 0.15 to 0.45, more preferably 0.2 to 0.4, and a glass transition temperature Tg < 37 °C.

The hard and soft copolymer blocks (B/S) and (S/B) can be random or tapered copolymer blocks, preferably the copolymer blocks (B/S) and (S/B) are random copolymer blocks.

The copolymer blocks (B/S), (S/B), S or B can be a block [(B/S)]ₙ, [(S/B)]ₙ, Sₙ or Bₙ respectively, consisting of n, respectively one or more, preferably 1 to 10, different or identical copolymer blocks (B/S),(S/B), S or B, where the blocks (B/S) or (S/B) can differ in their molar masses and/or in their vinylaromatic/diene ratio.

Preferably block copolymers A comprise at least one hard polymer block S composed of from 95 to 100 wt.-% of vinylaromatic monomers and of from 0 to 5 wt.-% of conjugated dienes, and comprises one or more copolymer blocks (B/S)_{A} each composed of from 65 to 95% by weight of vinylaromatic monomers and of from 35 to 5% by weight of conjugated dienes and of a glass transition temperature Tg_{A} in the range from 40° to 90°C, and comprises one or more copolymer blocks (B/S)_{B} each composed of from 1 to 60 wt.-%, preferably 1 to 30 wt.-%, of vinylaromatic monomers and of from 99 to 40 wt.-%, preferably 99 to 70 wt.-%, of conjugated dienes and of a glass transition temperature Tg_{B} in the range from -90° to -40°C, preferably -80° to -65°C.

The glass transition temperature is affected by the nature, constitution, and distribution of the monomers, and can be determined by differential scanning calorimetry (DSC) or differential mechanical thermal analysis (DMTA), or, if the distribution of the monomers is random, from the Fox equation. Precise DSC determination is usually based on ISO 11357-2, with evaluation of the 2nd cycle with a heating rate of 20 K/min.

The afore-mentioned preferred block copolymer A used in the thermoplastic polymer composition (I) of the invention has at least one polymer block S and copolymer block (B/S)_{A} acting as hard blocks, and at least one block (B/S)_{B} acting as soft block. Generally block copolymers A are tough materials which can preferably be used in the production of shrink films.

Preferably the vinylaromatic monomer used for the preparation of the blocks S, (B/S)s and (B/S)_{A} is styrene, and the conjugated diene used for the preparation of blocks (B/S)s and (B/S)_{A} is preferably isoprene or butadiene, more preferably butadiene.

More preferably block copolymers A are star-shaped.

The polymer blocks S can occur terminally (= outer block, first block after first initiation) - designated as block (Sₑ) - and also between the blocks (B/S)_{A} and (B/S)_{B} - designated as block (Sᵢ) (= inner block). The number-average molar mass Mₙ of the hard polymer blocks S, in particular blocks Sₑ and Sᵢ, of the block copolymer A is generally in the range from 2000 to 30000 g/mol.

The Sᵢ block maximizes incompatibility of the hard block (B/S)_{A} with the homo- or copolymer soft block (B/S)s acting as soft phase. This means that the intermediate phase that forms between the hard phase and the soft phase in the polymer matrix can be kept small.

The proportion by weight of phases, that soften in the range of room temperature. i.e. from 10 to 40°C, can thus be kept small which is beneficial for a low natural shrinkage at temperatures below 40°C.

Further short polymer blocks S can occur as a final polymer block - designated as block (S_{f}) - at the end of the polymerization (before chain termination or coupling) and/or as a short first polymer block (S_{e'}) formed at the start of the polymerization (after the first initiation).

The number-average molar mass Mₙ of the short polymer blocks S, in particular S_{f} and S_{e'}, is - independently from each other - less than 4000 g/mol.

The number-average molar mass Mₙ of the copolymer block (B/S)_{A} is generally in the range from 30000 to 300000 g/mol, preferably in the range of from 35000 to 150000 g/mol, more preferably in the range from 40000 to 100000 g/mol.

The molecular weights are usually determined by means of gel permeation chromatography (GPC) in THF as solvent, using polystyrene as standard. In the case of anionic polymerization, weight-average molecular weight is approximately identical with number-average molecular weight and peak molecular weight or peak molecular weight increase in case of polymer growth. The molecular weights of polybutadiene segments are generally overestimated by factor 1.7, compared to the theoretical values derived from the amount of monomer to initiator ratio, when measured in gel permeation chromatography calibrated using polystyrene standard.

The block copolymers A used according to the invention are prepared anionically, thus the molecular weight can be controlled by way of the ratio of amount of monomer to amount of initiator. The initiator can also be added repeatedly after monomer feed has taken place, the result then being a bi- or multimodal distribution.

The copolymer blocks (B/S)_{A} and (B/S)s can be a block [(B/S)_{A}]ₙ or [(B/S)_{B}]ₙ, respectively, consisting of n, respectively one or more, preferably 1 to 10, different or identical copolymer blocks (B/S)_{A} or (B/S)s, where the blocks (B/S)_{A} or (B/S)s can differ in their molar masses and/or in their vinylaromatic/diene ratio. Preferably, the block (B/S)_{A} or (B/S)_{B} is a single block.

It is preferable that the copolymer block (B/S)_{A} is made from 85 to 93 wt.-% of a vinylaromatic monomer, in particular styrene, and from 7 to 15 wt.-% of a diene, in particular isoprene or butadiene. Particular preference is given to butadiene. The glass transition temperature of the copolymer block (B/S)_{A} is preferably in the range from 50 to 80°C, particularly preferably from 60 to 75°C.

The distribution of the polymerized units of vinylaromatic monomers and dienes in the copolymer blocks (B/S)s and (B/S)_{A} of the block copolymer A is preferably random. These can by way of example be obtained by anionic polymerization using alkyllithium compounds in presence of randomizers, such as tetrahydrofuran, or potassium salts. Preference is given to use of potassium salts where the molar ratio of anionic initiator to potassium salt is in the range from 25:1 to 60:1, particularly preferably from 30:1 to 40:1. This method can at the same time achieve a low proportion of 1,2 linkages of the butadiene units. Suitable potassium salts are K alcoholates, in particular those soluble in the polymerization solvent, e.g. tert-amyl alcoholate or triethylcarbinolate, or other C-rich tertiary alcoholates.

The proportion of 1,2 linkages of the butadiene units is preferably in the range from 8 to 15%, based on the entirety of the 1,2, 1,4-cis, and 1,4-trans linkages.

The number-average molar mass Mₙ of the copolymer blocks (B/S)_{B} is generally in the range of from 5000 to 50000 g/mol, preferably from 10000 to 40000 g/mol, more preferably 12000 to 35000 g/mol.

It is preferable that the block (B/S)_{B} is a copolymer block made from 1 to 30 wt.-%, more preferably 5 to 28 wt.-%, most preferred 10 to 28 wt.-% vinylaromatic monomers, in particular styrene, and 99 to 70 wt.-%, more preferably 95 to 72 wt.-%, most preferred 90 to 72 wt.-% dienes, preferably isoprene or butadiene, in particular butadiene.

The glass transition temperature Tg_{B} of the homo- or copolymer block (B/S)s is preferably in the range from -80 to -65 °C.

Preferably block copolymer A is a star shaped block copolymer. The preparation of star-shaped block copolymers by sequential anionic polymerization is commonly known (e.g. US 6,593,430, col. 3, I. 1 to col. 4, I. 45).

Usually coupling with a coupling agent takes place after the last addition and complete polymerization of the finally added monomer(s), and the plurality of living anionic polymer chain ends are thus bonded to one another, and block copolymers A having star-shaped molecular architecture are formed.

It is generally possible to use any polyfunctional compound as coupling agent. It is preferable that the coupling agent has been selected from epoxidized vegetable oils, such as epoxidized linseed oil or epoxidized soybean oil, silanes, such as alkoxysilanes, e.g. Si(OMe)₄, chlorosilanes, such as SiCl₄, Si(Alkyl)₂Cl₂, Si(alkyl)Cl₃, where alkyl is a C₁-C₄-alkyl moiety, preferably methyl, halides of aliphatic hydrocarbons, such as dibromomethane or bischloromethylbenzene, tin tetrachloride, polyfunctional aldehydes, such as terephthaldehyde, polyfunctional ketones, polyfunctional esters, such as carboxylic esters, e.g. ethyl acetate, diethyl succinate, dimethyl or diethyl adipate, polyfunctional anhydrides, oligo-epoxides, such as 1,4-butanediol glycidyl ether, activated diolefins, such as diisopropenylbenzene, divinylbenzene, or distyrylbenzene; preferred coupling agents are epoxidized vegetable oils, such as epoxidized linseed oil or epoxidized soy oil, e.g. Efka^{®} PL 5382 (old Dehysol^{®} D82) from BASF AG or Vikoflex^{®} 7170 from Arkema.

The coupling agent forms the coupling center X, which is formed by reaction of the living anionic chain ends with one of the abovementioned coupling agents.

Preferred are star-shaped block copolymers A in which the stars have short branches of structure Sₑ-(B/S)_{B}~ and long branches of structure (B/S)_{A}-Sᵢ-(B/S)_{B}~, linked to one another via a coupling agent by way of the soft blocks (B/S)B.

Further preferred are star-shaped block copolymers A in which the stars have short branches of structure Sₑ-(B/S)_{B}~ and long branches of structure S_{e'}-(B/S)_{A}-Si-(B/S)_{B}~, linked to one another via a coupling agent by way of the soft blocks (B/S)_{B}.

Prior to linkage, a short polystyrene block S_{f} can optionally be incorporated into the living polymer chains to improve the coupling efficiency. Further preferred star-shaped block copolymers A of this type are:
star-shaped block copolymers A in which the stars have short branches of structure Sₑ-(B/S)_{B}-S_{f}~ and long branches of structure (B/S)_{A}-Si-(B/S)_{B}-S_{f}~, linked to one another via a coupling agent by way of the blocks S_{f}; and
star-shaped block copolymers A in which the stars have short branches of structure Sₑ-(B/S)_{B}-S_{f}~ and long branches of structure S_{e'}-(B/S)_{A}-Si-(B/S)_{B}-S_{f}~, linked to one another via a coupling agent by way of the blocks S_{f}.

The afore-mentioned preferred star-shaped block copolymers A are prepared by sequential anionic polymerization method using double initiation. The polymer blocks Sₑ and Sᵢ of said preferred star-shaped block copolymers A have the same constitution and number-average molar masses Mₙ.

In said afore-mentioned preferred star-shaped block copolymers A, the proportion of the entirety of the blocks (B/S)_{B} is preferably from 26 to 37 wt.-%, based on the entire block copolymer A.

In particular preferred are star-shaped block copolymers A where the proportion of the entirety of all of the blocks (B/S)_{B} is from 30 to 37 wt.-%, preferably 31 to 35 wt.-%, more preferably 32 to 33 wt.-%, based on the entire star-shaped block copolymer A.

More preferred are star-shaped block copolymers A as hereinbefore described, wherein the (hard) polymer blocks Sₑ ,Sᵢ, and, if present, S_{f} and/or S_{e'} are made from 95 to 100 wt.-% of vinylaromatic monomers, and 0 to 5 wt.-% of dienes, the blocks Sₑ and Sᵢ have number-average molar masses Mₙ in the range from 5000 to 30000 g/mol, if present, the blocks S_{f} and/or S_{e'} have number-average molar masses Mₙ of less than 4000 g/mol; the (hard) copolymer block (B/S)_{A} is made from 65 to 95 wt.-% vinylaromatic monomers and 35 to 5 wt.-% dienes and has a glass transition temperature Tg_{A} in the range from 40 to 90°C and a number-average molar mass Mₙ in the range of from 30000 to 100000 g/mol, and the (soft) homo- or copolymer blocks (B/S)_{B} are each made from 1 to 30 wt.-%, preferably 5 to 28 wt.-%, vinylaromatic monomers and 99 to 70 wt.-%, preferably 95 to 72 wt.-%, dienes and have a glass transition temperature Tg_{B} in the range from -90 to - 60°C, preferably -80 to -65°C, and a number-average molar mass Mₙ in the range of from 5000 to 50000 g/mol.

In particular preferred are the afore-mentioned star-shaped block copolymers A where the proportion of the entirety of all of the blocks (B/S)s is from 30 to 37 wt.-%, preferably 31 to 35 wt.-%, more preferably 32 to 33 wt.-%, based on the entire star-shaped block copolymer.

Particularly suitable star shaped block copolymers A are made from 60 to 80 wt.-%, preferably from 60 to 76 wt.-%, of vinylaromatic monomers, in particular styrene, and of from 20 to 40 wt.-%, preferably from 24 to 40 wt.-%, of diene, in particular butadiene or isoprene, based in each case on the entire block copolymer.

According to one preferred embodiment the block copolymer A has one of the following star shaped structures: 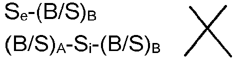 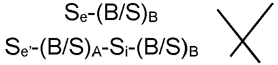 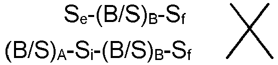 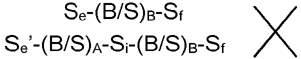 where Sₑ, Sᵢ, S_{f}, S_{e'},, (B/S)_{A} and (B/S)s are as defined above and X is a coupling center, which is formed by reaction of the living anionic polymer chain ends (= linked by way of the blocks (B/S)_{B} or S_{f}) with a polyfunctional coupling agent. Said polyfunctional coupling agent can generally be any suitable polyfunctional compound. Polyfunctional coupling agents can be e.g. polyfunctional aldehydes, ketones, esters, anhydrides or epoxides.

It is preferably selected from epoxidized vegetable oils, in particular epoxidized linseed oil or epoxidized soybean oil.

The star shaped block copolymers of the general formula shown above can be of different compositions and can be symmetrical (e.g. having two long and 2 short branches) or asymmetrical (e.g. having one long and 3 short branches). The preparation of symmetrical star shaped block copolymers is described in detail in WO 2018/153808 (see page 15, line 28 through page 16, line 30).

### Stabilizer Combination (B)

The stabilizer combination (B) is used in amounts of preferably 3500 to 5000 ppm (0.350 to 0.500 wt.-%), based on the entire thermoplastic polymer composition (I).

The stabilizer combination (B) consists of:
B1: 1500 to 2100 ppm (0.150 to 0.210 wt.-%) - based on the entire thermoplastic polymer composition (I) - 2,6-di-tert-butyl-4-(4,6-bis(octylthio)-1,3,5-triazin-2-ylamino) phenol,
B2: 1000 to 1600 ppm (0.100 to 0.160 wt.-%) - based on the entire thermoplastic polymer composition (I) - 2-[1-(2-hydroxy-3,5-di-tert-pentylphenyl)ethyl]-4,6-di-tert-pentylphenyl acrylate, or 2-tert-butyl-6-(3-tert-butyl-2-hydroxy-5-methylbenzyl)-4-methylphenyl acrylate or mixtures thereof, preferably 2-[1-(2-hydroxy-3,5-di-tert-pentylphenyl)ethyl]-4,6-di-tert-pentylphenyl acrylate, and
B3: 1000 to 1600 ppm (0.100 to 0.160 wt.-%) - based on the entire thermoplastic polymer composition (I) - tris(2,4-di-tert.-butylphenyl)phosphite.

Preferably stabilizer combination (B) consists of:
B1: 1900 to 2100 ppm (0.190 to 0.210 wt.-%), in particular 2000 ppm (0.200 wt.-%), 2,6-di-tert-butyl-4-(4,6-bis(octylthio)-1,3,5-triazin-2-ylamino) phenol,
B2: 1400 to 1600 ppm (0.140 to 0.160 wt.-%), in particular 1500 ppm (0.150 wt.-%), 2-[1-(2-hydroxy-3,5-di-tert-pentylphenyl)ethyl]-4,6-di-tert-pentylphenyl acrylate or 2-tert-butyl-6-(3-tert-butyl-2-hydroxy-5-methylbenzyl)-4-methylphenyl acrylate or mixtures thereof, preferably 2-[1-(2-hydroxy-3,5-di-tert-pentylphenyl)ethyl]-4,6-di-tert-pentylphenyl acrylate, and
B3: 1400 to 1600 ppm (0.140 to 0.160 wt.-%), in particular 1500 ppm (0.150 wt.-%), tris(2,4-di-tert.-butylphenyl)phosphite.

The afore-mentioned amounts are of components B1, B2 and B3 are each based on the entire thermoplastic polymer composition (I).

Preferably component B2 is 2-[1-(2-hydroxy-3,5-di-tert-pentylphenyl)ethyl]-4,6-di-tert-pentylphenyl acrylate.

Component B1 - a free-radical scavenger for O-radicals - is commercially available as e.g. Irganox^{®} 565 obtainable from BASF SE, Germany.

Component B2 - a free-radical scavenger for C-radicals - is commercially available:
2-[1-(2-hydroxy-3,5-di-tert-pentylphenyl)ethyl]-4,6-di-tert-pentylphenyl acrylate as e.g. Sumilizer^{®} GS from BASF SE, Germany, or Chinox^{(R)} GS from DBC or Zikanox^{(R)} 549 from Ziko; and
2-tert-butyl-6-(3-tert-butyl-2-hydroxy-5-methylbenzyl)-4-methylphenyl acrylate as e.g. Sumilizer^{®} GM from BASF SE, Germany.

Component B3 - a secondary oxidation inhibitor - is commercially available as e.g. Irgafos^{®} 168 obtainable from BASF SE, Germany, or Songnox^{®}168 FF from Songwon.

### Component C

Suitable stabilizers which can be used as component C are other stabilizers than B1, B2 and B3. Examples are other free-radical scavengers e.g other C-radical scavengers, such as α-tocopherol (vitamin E), other O-radical scavengers, such as pentaerythritol tetrakis[3-[3,5-di-tert-butyl-4-hydroxyphenyl]propionate (CAS number: 6683-19-8 e.g. Irganox^{®} 1010, Songnox^{®} 1010), 2-hexadecan-2-yl-4,6-dimethylphenol (e.g. Irganox 1141), and/or octadecyl 3-(3,5-di-tert-butyl-4-hydroxyphenyl)propionate (CAS number: 2082-79-3) (e.g. Irganox 1076), ethylene bis[3,3-bis[3-(1,1-dimethylethyl)-4-hydroxyphenyl]butanoate] (e.g. Hostanox^{®} O3), and thio-ether based co-stabilizers such as di-octadecyl disulphide (e.g. Hostanox^{®} SE10). Furthermore, as component C other secondary oxidation inhibitors based on phosphite such as triisononylphenyl phosphite (TNPP) can be used.

In case component C is present, the use of pentaerythritol tetrakis[3-[3,5-di-tert-butyl-4-hydroxyphenyl]propionate (e.g. Irganox^{®} 1010, Songnox^{®} 1010) is preferred.

Preferably, the component (C) is not present.

### Additives and/or processing aids D

Suitable processing aids and additives which can be used as component (D) are such as antiblocking agents, dyes, UV absorbers, plasticizers and waxes (lubricants).

The use of a plasticizer and/or waxes (lubricants) is preferred.

Preferably used as plasticizer in the inventive thermoplastic polymer composition (I) is a homogeneously miscible oil or oil mixture, in particular mineral oil (or white oil) or dioctyl adipate. The afore-mentioned plasticizers are preferably used in amounts of 0.05 to 3 wt.-%, more preferably 0.1 to 1 wt.-%, based on thermoplastic polymer composition (I).

Examples of waxes (lubricants) which can be used - preferably in amounts of 0.05 to 0.2 wt.-%, based on thermoplastic polymer composition (I) - are fatty acids having 14 to 22 carbon atoms such as stearic acid or behenic acid, their salts (e.g. Ca or Zn stearate) or esters (e.g. stearyl stearate or pentaerythrityl tetrastearate), and also amide derivatives of fatty acids having 14 to 22 carbon atoms (e.g. ethylenebisstearylamide).

For better processing, mineral-based antiblocking agents may be added to the thermoplastic polymer composition (I) of the invention. Examples include amorphous or crystalline silica, calcium carbonate, or aluminum silicate.

The maximum concentration of anti-blocking agent is below 1 wt.-%, preferably up to 0.1 wt-%, based on the thermoplastic polymer composition (I).

### Thermoplastic Polymers TP (= component (E)

Particularly suitable thermoplastic polymers TP are styrene polymers, such as vinyl-aromatic diene block-copolymers (SBC) different from block-copolymer A, standard polystyrene (GPPS), high impact polystyrene (HIPS), styrene-acrylonitrile copolymers (SAN), styrene-methyl methacrylate copolymers (S/MMA), or polymethacrylates, such as PMMA, polyesters, such as polyethylene terephthalate (PET), polyolefins, such as polyethylene or polypropylene, or polyvinyl chloride (PVC), or semicrystalline materials. Preferably used are styrene polymers, in particular SBC, GPPS and HIPS.

It is also possible to use polyacrylates, such as poly-n-butyl acrylate (PnBA), and other acrylate rubbers, ethylvinyl acetate polymers (EVA), etc. The thermoplastic polymers TP can be admixed to improve stiffness, solvent resistance, printability, antiblocking properties, recyclability, and cling properties.

It is also possible to use thermoplastic elastomers (TPE), for example linear or star-shaped, hydrogenated or non-hydrogenated styrene-butadiene or styrene-isoprene block copolymers other than block copolymers A. Suitable block copolymers are available commercially as, Kraton^{®} G. Addition of thermoplastic elastomers generally improves the toughness of the polymer composition of the invention.

### Thermoplastic polymer composition (I)

One further aspect of the invention is a process for the preparation of thermoplastic polymer composition (I) according to the invention. As described above the at least one block copolymer (A) is generally obtained by an anionic polymerization process. Preferably block copolymer A is obtained by an anionic polymerization process with 1, 2 or 3 initiation steps and sequential monomer addition and polymerization.

The preparation of such block copolymers by sequential anionic polymerization is commonly known (cp. e.g. US 6,593,430, col. 3, I. 1 to col. 4, I. 45).

Preferred star-shaped block copolymers (A) are prepared by sequential anionic polymerization method using double or triple initiation. After chain termination or after coupling of the living anionic polymer chain ends the obtained linear or star shaped block copolymers can be further worked-up. Optionally a small amount of alcohol, such as isopropanol, can be used to protonate the possible small amounts of residual carbanions and the polymer-bonded alcoholates which may have been produced in the termination or coupling step, in order to avoid formation of deposits in the tank and discoloration of the product, and to lower the viscosity of the solution, and, prior to further work-up, CO₂/water can be used in a conventional manner to acidify the product slightly, so that the product subsequently obtained is glass-clear with no color tinge.

Preferably after chain termination or after coupling of the living anionic polymer chain ends, and after optional addition of alcohol, and CO₂ and water as described hereinbefore, the obtained linear or star shaped block copolymers (A) are stabilized with the hereinbefore described stabilizer combination (B) consisting of stabilizer components (B1), (B2) and (B3), and optionally one or more hereinbefore described stabilizers (C) different from (B1), (B2) and (B3). Stabilizer components (B1), (B2), (B3) and optional stabilizers (C) can also be added at a later stage of the process for the preparation of thermoplastic polymer composition (I). Optional components (D) and/or (E) can also be added after chain termination or after coupling of the living anionic polymer chain ends, but can also be added at a later stage of the process for the preparation of thermoplastic polymer composition (I).

Then, preferably the solvent may be removed by use of conventional methods, and optionally the obtained thermoplastic polymer composition (I) may be extruded and pelletized by use of conventional methods (cp. e.g. WO 2018/153808 A1, p. 12, I. 1 to 38).

In particular in case thermoplastic polymer TP (component (E)) is present, the thermoplastic molding composition (I) according to the invention can be obtained by mixing components A, B, E and optional components C and/or D by any known method. However, it is preferable when the components are blended by melt mixing, for example conjoint extrusion, kneading or preferably a twin screw extruder, more preferably a counterrotating twin screw extruder. For this process block copolymer A can be used as a premixture with component B and further optional components C and/or D as described hereinbefore and blended as stated hereinbefore by addition of component E. This is usually done at temperatures in the range of from 160°C to 300°C, preferably from 180°C to 250°C, in particular 200 to 220°C.

Capillary rheology tests show that thermoplastic polymer compositions (I) according to the invention have low crosslinking and exhibit a low gel/fish-eye content. Thermoplastic polymer compositions (I) have a final die pressure (die of 16 mm length and 1 mm diameter (L/D = 16) of 2.5 MPa or lower when using a capillary rheology at a temperature of 250 °C, a constant shear of 100 s⁻¹ and over a time of 63 min.

A further aspect of the invention is the use of thermoplastic polymer composition (I) for the production of films, in particular shrink films.

A further aspect of the invention is a shrink film produced from thermoplastic polymer composition (I) according to the invention.

The preparation of shrink films is commonly known. Processing may be carried out using the known processes for thermoplastic polymer - in particular SBC - processing, in particular production may be effected by thermoforming, extrusion, injection molding, calendaring, blow molding, or compression molding, preferably by extrusion, thermoplastic polymer composition (I) to films.

The invention is further illustrated by the claims and the following examples.

### Examples

### Styrene-butadiene block-copolymer A

In a batch reactor (stainless steel reactor, stirred, 50 m³) 21300 L of cyclohexane at 40 °C was used as initial charge and 165 L styrene (S1) was added at 20 m³/h. When 16 L of S1 had been dosed, 30.00 L of a 1.4 M sec-butyllithium solution (BuLi 1) for initiation and 3.88 L of a 5 wt% potassium tert-amylate solution in cyclohexane as randomizer had been dosed at once. The reaction was allowed to proceed under continuous stirring to complete monomer consumption (identified by no further temperature increase of the reaction mixture).

In a next step, 3139 L styrene (S2) and 538 L butadiene (B1) were added together and the polymerization reaction, under continuous stirring, was allowed to run to complete monomer consumption (identified by no further temperature increase of the reaction mixture). After complete monomer consumption, the polymerization mixture was cooled by means of reflux cooling to a temperature below 70 °C.

In a next step, 65.26 L of a 1.4 M sec-butyllithium solution (BuLi 2) for initiation and 8.73 L of a 5 wt% potassium tert-amylate solution in cyclohexane as randomizer had been dosed at once.

In a next step, 1758 L styrene (S3) was added and the polymerization reaction, under continuous stirring, was allowed to run to complete monomer consumption (identified by no further temperature increase of the reaction mixture). After complete monomer consumption, the polymerization mixture was cooled by means of reflux cooling to a temperature below 56 °C.

In a next step, 677 L styrene (S4) and 2956 L butadiene (B2) were added together and the polymerization reaction, under continuous stirring, was allowed to run to complete monomer consumption (identified by no further temperature increase of the reaction mixture). After complete monomer consumption, the polymerization mixture was cooled by means of reflux cooling to a temperature below 90 °C.

In a next step, 121 L styrene (S5) was added and the polymerization reaction, under continuous stirring, was allowed to run to complete monomer consumption (identified by no further temperature increase of the reaction mixture).

Then, 10 minutes after the last complete monomer consumption, 12.7 L Edeno^{I®} D82 (epoxydized soybean oil) was added to the block copolymer polymer solution and allowed to react for 10 minutes while stirring.

Then, the reaction mixture was stabilized by acidification with 0.06 phm (= parts (g) per 100 g monomers) demineralized water and a 0.43 phm CO₂ gas stream.

In a next step, samples of this block copolymer solution were taken. Then to each polymer sample stabilizers were added in amounts (based on the polymer content in the solution) as shown in Table 1 and each sample was homogenized by means of stirring to obtain a block copolymer composition as defined in Table 1. Thereafter, the cyclohexane solvent was removed from the block copolymer composition in a co-rotating degassing twin screw extruder.

Irganox^{®} 1010, Sumilizer^{®} GS, Irgafos^{®} 168, Irganox^{®} 1141 and Irganox^{®} 565 were received from BASF SE, Germany. Hostanox^{®} O3 and Hostanox SE10 were received from Clariant International Ltd, Switzerland. CPD-650 was received from Guangdong Xinhuayue Petrochemical Incorporated Company.

**TABLE 1**

| | Polymer Sample | Irganox^{®} 1010 | Sumilizer^{®} GS | Irgafos^{®} 168 | Irganox^{®} 1141 | Irganox^{®} 565 | Hostanox^{®} O3 | Hostanox^{®} SE10 | CPD-650 | Total Sum | Final pressure at 250°C | Final pressure at 270°C |
|---|---|---|---|---|---|---|---|---|---|---|---|---|
| | | *ppm* | *ppm* | *ppm* | *ppm* | *ppm* | *ppm* | *ppm* | *ppm* | *ppm* | *MPa* | *MPa* |
| Inventive example | A | 0 | 1500 | 1500 | 0 | 2000 | 0 | 0 | 0 | 5000 | 2.1 | 9.9 |
| Inventive example | B | 0 | 1500 | 1500 | 0 | 2000 | 0 | 0 | 0 | 5000 | 2.1 | 10.3 |
| reference example | C | 1000 | 1500 | 1500 | 0 | 1000 | 0 | 0 | 0 | 5000 | 2.3 | / |
| Comparative example | D | 2000 | 1500 | 1500 | 0 | 0 | 0 | 0 | 0 | 5000 | 2.6 | 11.2 |
| Comparative example | E | 750 | 1500 | 1500 | 0 | 0 | 1250 | 0 | 0 | 5000 | 2.6 | / |
| Comparative example | F | 0 | 1500 | 1500 | 2000 | 0 | 0 | 0 | 0 | 5000 | 3.0 | / |
| Comparative example | G | 1000 | 1500 | 1500 | 0 | 0 | 0 | 0 | 1000 | 5000 | 3.1 | / |
| Comparative example | H | 750 | 1500 | 1500 | 0 | 0 | 0 | 1250 | 0 | 5000 | 3.4 | / |
| reference example | X | 1750 | 1500 | 1500 | 0 | 250 | 0 | 0 | 0 | 5000 | | 10.3 |

| | | | | | | | | | | | | |
|---|---|---|---|---|---|---|---|---|---|---|---|---|
| ppm = parts per million (mg/kg) based on entire thermoplastic polymer composition (I) | | | | | | | | | | | | |

In a next step, the stabilized block copolymer samples were subjected to a capillary rheology experiment to evaluate the resistance of the product against crosslinking upon energy input. The material was loaded to the barrel of the capillary rheometer at 250 °C and preheated for 3 minutes (Inventive examples A, B, reference example C and comparative examples D to H). Next, a force was applied at ram (piston) to push the material through a die of 16 mm length and 1 mm diameter (L/D = 16) at a constant shear rate of 100 s⁻¹ over a time of 63 min. During this experiment, the pressure at the die is measured to maintain this shear rate. The more crosslinking appears in the sample during the experiment, the more difficult it becomes to press the material through the die at a constant shear rate. This is reflected as a pressure increase at the die. Therefore, the pressure at the die is a direct correlation for the degree of crosslinking in the sample. The higher the final pressure, the higher is the degree of crosslinking.

Furthermore, a sample of inventive examples A, B, comparative example D and reference example X, respectively, was loaded to the barrel of the capillary rheometer at 270 °C and preheated for 3 minutes and then a force was applied to each sample as hereinbefore described.

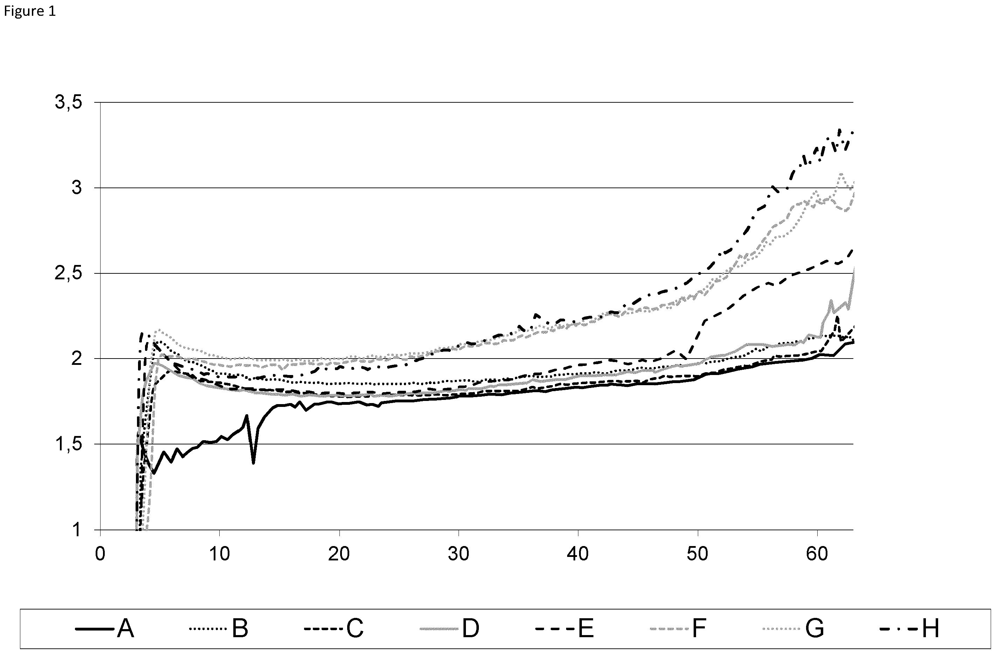

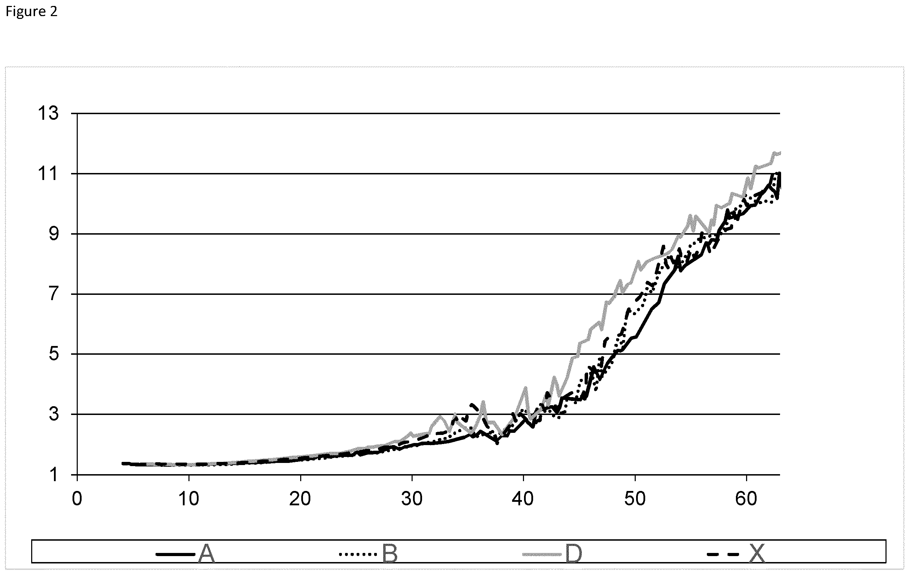

The final pressure per sample can be found in Table 1 and Figures 1 and 2.
Figure 1: The Y-axis of the graph shows the pressure in MPa and the X-axis shows the time in minutes. The measured values (at 250°C) obtained for polymer samples A to H are shown by different continuous, dashed and dotted lines.
Figure 2: The Y-axis of the graph shows the pressure in MPa and the X-axis shows the time in minutes. The measured values (at 270°C) obtained for polymer samples A; B, D and X are shown by different continuous, dashed and dotted lines.

Samples A and B have the same composition and give an indication of the consistency of the experiment. Table 1 and Figures 1 and 2 show that the final pressure of the inventive examples according to samples A and B and the reference examples C and X is significantly lower than the final pressure obtained for comparative examples (samples D to H).

Thus, it has been proven that by use of the stabilizer combination as used in the block copolymer composition according to the invention (samples A, B) the crosslinking of the block copolymers can be reduced.

## Claims

1. Thermoplastic polymer composition (I) comprising (or consisting of) components (A), (B), and optionally (C), (D) and/or (E):
(A) at least one block copolymer A comprising (or consisting of):
A1: 60 to 95 wt.-% - based on block copolymer A - polymerized units of at least one vinyl aromatic monomer, preferably styrene, and
A2: 5 to 40 wt.-% - based on block copolymer A - polymerized units of at least one conjugated diene, preferably butadiene or isoprene;
(B) a stabilizer combination consisting of stabilizer components (B1), (B2) and (B3):
B1: 1500 to 2100 ppm (0.150 to 0.210 wt.-%) - based on the entire thermoplastic polymer composition (I) - 2,6-di-tert-butyl-4-(4,6-bis(octylthio)-1,3,5-triazin-2-ylamino) phenol (CAS number: 991-84-4),
B2: 1000 to 1600 ppm (0.100 to 0.160 wt.-%) - based on the entire thermoplastic polymer composition (I) - 2-[1-(2-hydroxy-3,5-di-tert-pentylphenyl)ethyl]-4,6-di-tert-pentylphenyl acrylate (CAS number: 123968-25-2) or 2-tert-butyl-6-(3-tert-butyl-2-hydroxy-5-methylbenzyl)-4-methylphenyl acrylate (CAS number: 61167-58-6) or mixtures thereof, and
B3: 1000 to 1600 ppm (0.100 to 0.160 wt.-%) - based on the entire thermoplastic polymer composition (I) - tris(2,4-di-tert.-butylphenyl)phosphite (CAS number: 31570-04-4);
(C) 0 to 5000 ppm (0 to 0.500 wt.-%) - based on the entire thermoplastic polymer composition (I) - of one or more stabilizers different from (B1), (B2) and (B3);
(D) optionally one or more additives and/or processing aids other than (B) and (C);
(E) optionally at least one, preferably 1, 2 or 3, more preferably one, thermoplastic polymer TP other than block copolymer A.

2. Thermoplastic polymer composition (I) according to claim 1 wherein stabilizer combination (B) consists of stabilizer components (B1), (B2) and (B3) in the following amounts:
B1: 1900 to 2100 ppm (0.190 to 0.210 wt.-%),
B2: 1400 to 1600 ppm (0.140 to 0.160 wt.-%),
B3: 1400 to 1600 ppm (0.140 to 0.160 wt.-%).

3. Thermoplastic polymer composition (I) according to claim 1 or 2 wherein component B2 is 2-[1-(2-hydroxy-3,5-di-tert-pentylphenyl)ethyl]-4,6-di-tert-pentylphenyl acrylate.

4. Thermoplastic polymer composition (I) according to any of claims 1 to 3 wherein component C is pentaerythritol tetrakis[3-[3,5-di-tert-butyl-4-hydroxyphenyl]-propionate.

5. Thermoplastic polymer composition (I) according to any of claims 1 to 3 wherein optional component C is not present.

6. Thermoplastic polymer composition (I) according to any of claims 1 to 5 wherein block copolymer A comprises (consists of):
A1: 60 to 80 wt.-%, preferably 60 to 76 wt.-%, most preferred 65 to 76 wt.-%, - based on block copolymer A - polymerized units of at least one vinyl aromatic monomer, in particular styrene, and
A2: 20 to 40 wt.-%, preferably 24 to 40 wt.-%, most preferred 24 to 35 wt.-%, - based on block copolymer A - polymerized units of at least one conjugated diene, in particular butadiene or isoprene.

7. Thermoplastic polymer composition (I) according to any of claims 1 to 6 wherein block copolymer A comprises at least one hard polymer block S composed of from 95 to 100 wt.-% of vinylaromatic monomers and of from 0 to 5 wt.-% of conjugated dienes, optionally one or more hard copolymer blocks (B/S) each composed of conjugated dienes and vinylaromatic monomers having a B/S-ratio (= diene/vinylaromatic monomer-ratio) < 0.25, preferably 0.1 to 0.2, more preferably 0.1 to 0.15, and a glass transition temperature Tg (ISO 11357-2) > 37 °C, and one or more soft blocks B composed of 100 wt.-% conjugated diene and/or one or more soft copolymer blocks (S/B) each composed of vinylaromatic monomers and of conjugated dienes having a S/B-ratio (= vinylaromatic monomer/diene-ratio) < 0.5, preferably 0.15 to 0.45, more preferably 0.2 to 0.4, and a glass transition temperature Tg < 37 °C.

8. Thermoplastic polymer composition (I) according to claim 7 wherein the hard and soft copolymer blocks (B/S) and (S/B) are random copolymer blocks.

9. Thermoplastic polymer composition (I) according to claim 7 or 8 wherein block copolymer A comprises at least one hard block S composed of from 95 to 100 wt.-% of vinylaromatic monomers, preferably styrene, and of from 0 to 5 wt.-% of conjugated dienes, preferably isoprene and/or butadiene, and comprises one or more copolymer blocks (B/S)_{A} each composed of from 65 to 95% by weight of vinylaromatic monomers, preferably styrene, and of from 35 to 5% by weight of conjugated dienes, preferably isoprene and/or butadiene, and of a glass transition temperature Tg_{A} in the range from 40° to 90°C, and comprises one or more copolymer blocks (B/S)_{B} each composed of from 1 to 60 wt.-%, preferably 1 to 30 wt.-%, of vinylaromatic monomers, preferably styrene, and of from 99 to 40 wt.-%, preferably 99 to 70 wt.-%, of conjugated dienes, preferably isoprene and/or butadiene, and of a glass transition temperature Tg_{B} in the range from -90° to -40°C, preferably -80° to -65°C.

10. Thermoplastic polymer composition (I) according to any of claims 1 to 9 wherein block copolymer A is a star shaped block copolymer.

11. Thermoplastic polymer composition (I) according to claim 10 wherein the stars of block copolymer A have:
short branches of structure Sₑ-(B/S)_{B}~ and long branches of structure (B/S)_{A}-Si-(B/S)_{B}~, linked to one another via a coupling agent by way of the soft blocks (B/S)B. or
short branches of structure Sₑ-(B/S)_{B}~ and long branches of structure S_{e'}-(B/S)_{A}-Si-(B/S)_{B}~, linked to one another via a coupling agent by way of the soft blocks (B/S)_{B}, or
short branches of structure Sₑ-(B/S)_{B}-Sᵣ~ and long branches of structure (B/S)_{A}-Sᵢ-(B/S)_{B}-S_{f}~, linked to one another via a coupling agent by way of the blocks S_{f}, or
short branches of structure Sₑ-(B/S)_{B}-S_{f}~ and long branches of structure S_{e'}-(B/S)_{A}-Sᵢ-(B/S)_{B}-S_{f}~, linked to one another via a coupling agent by way of the blocks S_{f},
where Sₑ and Sᵢ are blocks S having a number-average molar mass (determined by gel permeation chromatography in THF, using polystyrene as standard) Mₙ of 5000 to 30000 g/mol, S_{f} and S_{e'} are blocks S having Mₙ of less than 4000 g/mol, and (B/S)_{A} and (B/S)s are as defined above, where Mₙ of block (B/S)_{A} is 30000 to 300000 and Mn of block (B/S)_{B} is 5000 to 50000 g/mol.

12. Thermoplastic polymer composition (I) according to any of claims 1 to 11 wherein thermoplastic polymer TP is at least one polymer selected from: styrene polymers, such as vinylaromatic diene block-copolymer (SBC), standard polystyrene (GPPS), styrene-acrylonitrile copolymers (SAN), styrene-methyl methacrylate copolymers (S/MMA), or polymethacrylates, such as PMMA, polyesters, such as polyethylene terephthalate (PET), polyolefins, such as polyethylene or polypropylene, or polyvinyl chloride (PVC), or semicrystalline materials, or polyacrylates, or thermoplastic elastomers (TPE) .

13. Process for the preparation of a thermoplastic polymer composition (I) according to any of claims 1 to 12 which comprises:
i) sequential anionic polymerization of a monomer composition, comprising:
A1: 60 to 95 wt.-% of at least one vinyl aromatic monomer, preferably styrene, and,
A2: 5 to 40 wt.-% of at least one conjugated diene, preferably butadiene, to obtain living anionic polymer chains;
ii) then, chain termination or coupling of the living anionic polymer chains produced in step i) to obtain - linear or star shaped - block copolymer A;
iii) then, optionally addition of alcohol, and CO₂ and water; and
iv) - after step ii) or iii) - addition of stabilizer components (B1), (B2) and (B3), and, if present, addition of stabilizers (C), additives and/or processing aids (D) and/or component (E) to obtain composition (I).

14. A process for the preparation of shrink films wherein a thermoplastic polymer composition (I) according to any of claims 1 to 12 is formed to films by thermoforming, extrusion, injection molding, calendaring, blow molding or compression molding.

15. A shrink film produced from a thermoplastic polymer composition (I) according to any of claims 1 to 12.

16. Use of a thermoplastic polymer composition (I) according to any of claims 1 to 12 for the production of films, in particular shrink films.

## Patentansprüche

1. Thermoplastische Polymerzusammensetzung (I), umfassend (oder bestehend aus) Komponenten (A), (B) und optional (C), (D) und/oder (E):
(A) mindestens ein Blockcopolymer A, umfassend (oder bestehend aus):
A1: 60 bis 95 Gew.-% - bezogen auf Blockcopolymer A - polymerisierte Einheiten aus mindestens einem vinylaromatischen Monomer, bevorzugt Styrol, und
A2: 5 bis 40 Gew.-% - bezogen auf Blockcopolymer A - polymerisierte Einheiten mindestens eines konjugierten Diens, bevorzugt Butadien oder Isopren;
(B) eine Stabilisatorkombination bestehend aus den Stabilisatorkomponenten (B1), (B2) und (B3):
B1: 1500 bis 2100 ppm (0,150 bis 0,210 Gew.-%) - bezogen auf die gesamte thermoplastische Polymerzusammensetzung (I) - 2,6-Di-tert-butyl-4-(4,6-bis(octylthio)-1,3,5-triazin-2-ylamino) phenol (CAS-Nummer: 991-84-4),
B2: 1000 bis 1600 ppm (0,100 bis 0,160 Gew.-.%) - bezogen auf die gesamte thermoplastische Polymerzusammensetzung (I) - 2-[1-(2-Hydroxy-3,5-di-tert-pentylphenyl)ethyl]-4,6-di-tert-pentylphenylacrylat (CAS-Nummer: 123968-25-2) oder 2-tert-Butyl-6-(3-tert-Butyl-2-hydroxy-5-methylbenzyl)-4-methylphenylacrylat (CAS-Nummer: 61167-58-6) oder Mischungen davon, und
B3: 1000 bis 1600 ppm (0,100 bis 0,160 Gew.-%) - bezogen auf die gesamte thermoplastische Polymerzusammensetzung (I) - Tris(2,4-di-tert.-butylphenyl)phosphit (CAS-Nummer: 31570-04-4);
(C) 0 bis 5000 ppm (0 bis 0,500 Gew.-%) - bezogen auf die gesamte thermoplastische Polymerzusammensetzung (I) - eines oder mehrerer von (B1), (B2) und (B3) verschiedener Stabilisatoren;
(D) optional einen oder mehrere Additive und/oder Verarbeitungshilfsstoffe, die von (B) und (C) verschieden sind;
(E) optional mindestens ein, bevorzugt 1, 2 oder 3, mehr bevorzugt ein thermoplastisches Polymer TP, das kein Blockcopolymer A ist.

2. Thermoplastische Polymerzusammensetzung (I) nach Anspruch 1, wobei die Stabilisatorkombination (B) aus den Stabilisatorkomponenten (B1), (B2) und (B3) in den folgenden Mengen besteht:
B1: 1900 bis 2100 ppm (0,190 bis 0,210 Gew.-%),
B2: 1400 bis 1600 ppm (0,140 bis 0,160 Gew.-%),
B3: 1400 bis 1600 ppm (0,140 bis 0,160 Gew.-%).

3. Thermoplastische Polymerzusammensetzung (I) nach Anspruch 1 oder 2, wobei Komponente B2 2-[1-(2-Hydroxy-3,5-di-tert-pentylphenyl)ethyl]-4,6-di-tert-pentylphenylacrylat ist.

4. Thermoplastische Polymerzusammensetzung (I) nach einem beliebigen der Ansprüche 1 bis 3, wobei Komponente C Pentaerythrittetrakis[3-[3,5-di-tert-Butyl-4-hydroxyphenyl]-propionat ist.

5. Thermoplastische Polymerzusammensetzung (I) nach einem beliebigen der Ansprüche 1 bis 3, wobei die optionale Komponente C nicht vorhanden ist.

6. Thermoplastische Polymerzusammensetzung (I) nach einem beliebigen der Ansprüche 1 bis 5, wobei das Blockcopolymer A umfasst (besteht aus):
A1: 60 bis 80 Gew.-%, bevorzugt 60 bis 76 Gew.-%, am meisten bevorzugt 65 bis 76 Gew.-%, - bezogen auf Blockcopolymer A - polymerisierte Einheiten mindestens eines vinylaromatischen Monomers, insbesondere Styrol, und
A2: 20 bis 40 Gew.-%, bevorzugt 24 bis 40 Gew.-%, am meisten bevorzugt 24 bis 35 Gew.-%, - bezogen auf Blockcopolymer A - polymerisierte Einheiten mindestens eines konjugierten Diens, insbesondere Butadien oder Isopren.

7. Thermoplastische Polymerzusammensetzung (I) nach einem beliebigen der Ansprüche 1 bis 6, wobei das Blockcopolymer A mindestens einen harten Polymerblock S, zusammengesetzt aus 95 bis 100 Gew.-% vinylaromatischen Monomeren und 0 bis 5 Gew.% konjugierten Dienen, optional einen oder mehrere harte Copolymerblöcke (B/S), jeweils zusammengesetzt aus konjugierten Dienen und vinylaromatischen Monomeren mit einem B/S-Verhältnis (= Dien/Vinylaromatisches Monomer-Verhältnis) < 0,25, bevorzugt 0,1 bis 0,2, mehr bevorzugt 0,1 bis 0,15, und einer Glasübergangstemperatur Tg (ISO 11357-2) > 37 °C, und einen oder mehrere weiche Blöcke B, zusammengesetzt aus 100 Gew.-% konjugiertem Dien und/oder einem oder mehreren weichen Copolymerblöcken (S/B), jeweils zusammengesetzt aus vinylaromatischen Monomeren und konjugierten Dienen mit einem S/B-Verhältnis (= vinylaromatisches Monomer/Dien-Verhältnis) < 0,5, bevorzugt 0,15 bis 0,45, mehr bevorzugt 0,2 bis 0,4, und einer Glasübergangstemperatur Tg < 37 °C, umfasst.

8. Thermoplastische Polymerzusammensetzung (I) nach Anspruch 7, wobei die harten und weichen Copolymerblöcke (B/S) und (S/B) statistische Copolymerblöcke sind.

9. Thermoplastische Polymerzusammensetzung (I) nach Anspruch 7 oder 8, wobei das Blockcopolymer A mindestens einen harten Block S umfasst, zusammengesetzt aus 95 bis 100 Gew.-% vinylaromatischen Monomeren, bevorzugt Styrol, und 0 bis 5 Gew.-% konjugierten Dienen, bevorzugt Isopren und/oder Butadien, und einen oder mehrere Copolymerblöcke (B/S)_{A} umfasst, jeweils zusammengesetzt aus 65 bis 95 Gew.-% vinylaromatischen Monomeren, bevorzugt Styrol, und 35 bis 5 Gew.-% konjugierten Dienen, bevorzugt Isopren und/oder Butadien, und mit einer Glasübergangstemperatur Tg_{A} im Bereich von 40° bis 90°C, und einen oder mehrere Copolymerblöcke (B/S)_{B} umfasst, jeweils zusammengesetzt aus 1 bis 60 Gew.-%, bevorzugt 1 bis 30 Gew.-%, vinylaromatischen Monomeren, bevorzugt Styrol, und 99 bis 40 Gew.-%, bevorzugt 99 bis 70 Gew.-%, konjugierten Dienen, bevorzugt Isopren und/oder Butadien, und mit einer Glasübergangstemperatur Tg_{B} im Bereich von -90° bis -40°C, bevorzugt -80° bis -65°C.

10. Thermoplastische Polymerzusammensetzung (I) nach einem beliebigen der Ansprüche 1 bis 9, wobei das Blockcopolymer A ein sternförmiges Blockcopolymer ist.

11. Thermoplastische Polymerzusammensetzung (I) nach Anspruch 10, wobei die Sterne des Blockcopolymers A aufweisen:
kurze Zweige der Struktur Sₑ-(B/S)_{B}~ und lange Zweige der Struktur (B/S)_{A}-Sᵢ-(B/S)_{B}~, die über ein Kopplungsmittel durch die weichen Blöcke (B/S)B miteinander verbunden sind, oder
kurze Zweige der Struktur Sₑ-(B/S)_{B}~ und lange Zweige der Struktur S_{e'}-(B/S)_{A}-Sᵢ-(B/S)_{B}~, die über ein Kopplungsmittel durch die weichen Blöcke (B/S)_{B} miteinander verbunden sind, oder
kurze Zweige der Struktur Sₑ-(B/S)_{B}-S_{f}~ und lange Zweige der Struktur (B/S)_{A}-Sᵢ-(B/S)_{B}-S_{f}~, die über ein Kopplungsmittel durch die Blöcke S_{f} miteinander verbunden sind, oder
kurze Zweige der Struktur Sₑ₋(B/S)_{B}-S_{f}~ und lange Zweige der Struktur S_{e'}-(B/S)_{A}-Sᵢ-(B/S)_{B}-S_{f}~, die über ein Kopplungsmittel durch die Blöcke S_{f} miteinander verbunden sind,
wobei Sₑ und Sᵢ Blöcke S mit einer zahlenmittleren molaren Masse (bestimmt durch Gelpermeationschromatographie in THF unter Verwendung von Polystyrol als Standard) Mₙ von 5000 bis 30000 g/mol sind, Sᵣ und S_{e'} Blöcke S mit Mₙ von weniger als 4000 g/mol sind, und (B/S)_{A} und (B/S)_{B} wie oben definiert sind, wobei Mₙ des Blocks (B/S)_{A} 30000 bis 300000 und Mn des Blocks (B/S)_{B} 5000 bis 50000 g/mol ist.

12. Thermoplastische Polymerzusammensetzung (I) nach einem beliebigen der Ansprüche 1 bis 11, wobei das thermoplastische Polymer TP mindestens ein Polymer ist, ausgewählt aus: Styrolpolymeren, wie vinylaromatischem Dien-Blockcopolymer (SBC), Standardpolystyrol (GPPS), Styrol-Acrylnitril-Copolymeren (SAN), Styrol-Methylmethacrylat-Copolymeren (S/MMA), oder Polymethacrylaten, wie PMMA, Polyestern, wie Polyethylenterephthalat (PET), Polyolefinen, wie Polyethylen oder Polypropylen, oder Polyvinylchlorid (PVC), oder teilkristallinen Materialien, oder Polyacrylaten, oder thermoplastischen Elastomeren (TPE).

13. Verfahren zur Herstellung einer thermoplastischen Polymerzusammensetzung (I) nach einem beliebigen der Ansprüche 1 bis 12, umfassend:
i) sequentielle anionische Polymerisation einer Monomerzusammensetzung, umfassend:
A1: 60 bis 95 Gew.-% mindestens eines vinylaromatischen Monomers, bevorzugt Styrol, und
A2: 5 bis 40 Gew.-% mindestens eines konjugierten Diens, bevorzugt Butadien, um lebende anionische Polymerketten zu erhalten;
ii) dann Kettenabbruch oder Kopplung der in Schritt i) hergestellten lebenden anionischen Polymerketten, um das lineare oder sternförmige Blockcopolymer A zu erhalten;
iii) dann optional Zugabe von Alkohol, und CO₂ und Wasser; und
iv) - nach Schritt ii) oder iii) - Zugabe der Stabilisatorkomponenten (B1), (B2) und (B3), und, falls vorhanden, Zugabe von Stabilisatoren (C), Additiven und/oder Verarbeitungshilfsmitteln (D) und/oder der Komponente (E), um die Zusammensetzung (I) zu erhalten.

14. Verfahren zur Herstellung von Schrumpffolien, wobei eine thermoplastische Polymerzusammensetzung (I) nach einem beliebigen der Ansprüche 1 bis 12 durch Thermoformen, Extrudieren, Spritzgießen, Kalandrieren, Blasformen oder Formpressen zu Folien geformt wird.

15. Schrumpffolie, hergestellt aus einer thermoplastischen Polymerzusammensetzung (I) nach einem beliebigen der Ansprüche 1 bis 12.

16. Verwendung einer thermoplastischen Polymerzusammensetzung (I) nach einem beliebigen der Ansprüche 1 bis 12 zur Herstellung von Folien, insbesondere Schrumpffolien.

## Revendications

1. Composition de polymère thermoplastique (I) comprenant (ou consistant en) les composants (A), (B), et éventuellement (C), (D) et/ou (E) :
(A) au moins un copolymère à blocs A comprenant (ou consistant en) :
A1 : 60 à 95 % en poids - sur la base du copolymère à blocs A - d'unités polymérisées d'au moins un monomère vinylaromatique, de préférence du styrène, et
A2 : 5 à 40 % en poids - sur la base du copolymère à blocs A - d'unités polymérisées d'au moins un diène conjugué, de préférence du butadiène ou de l'isoprène ;
(B) une combinaison de stabilisants constituée des composants de stabilisants (B1), (B2) et (B3) :
B1 : 1500 à 2100 ppm (0,150 à 0,210 % en poids) - sur la base de la totalité de la composition de polymère thermoplastique (I) - 2,6-di-tert-butyl-4-(4,6-bis(octylthio)-1,3,5-triazin-2-ylamino) phénol (numéro CAS : 991-84-4),
B2 : 1000 à 1600 ppm (0,100 à 0,160 % en poids) - sur la base de la totalité de la composition de polymère thermoplastique (I) - acrylate de 2-[1-(2-hydroxy-3,5-di-tert-pentylphényl)éthyl]-4,6-di-tert-pentylphényl (numéro CAS : 123968-25-2) ou acrylate de 2-tert-butyl-6-(3-tert-butyl-2-hydroxy-5-méthylbenzyl)-4-méthylphényl (numéro CAS : 61167-58-6) ou mélanges de ces substances, et
B3 : 1000 à 1600 ppm (0,100 à 0,160 % en poids) -- sur la base de la totalité de la composition de polymère thermoplastique (I) - tris(2,4-di-tert.-butylphényl)phosphite (numéro CAS : 31570-04-4) ;
(C) 0 à 5000 ppm (0 à 0,500 % en poids) - sur la base de la totalité de la composition de polymère thermoplastique (I) - d'un ou de plusieurs stabilisants différents de (B1), (B2) et (B3) ;
(D) éventuellement un ou plusieurs additifs et/ou auxiliaires technologiques autres que (B) et (C) ;
(E) éventuellement au moins un, de préférence 1, 2 ou 3, plus de préférence un, polymère thermoplastique TP autre que le copolymère à blocs A.

2. Composition de polymère thermoplastique (I) selon la revendication 1, dans laquelle la combinaison de stabilisants (B) est constituée des composants stabilisants (B1), (B2) et (B3) dans les quantités suivantes :
B1 : 1900 à 2100 ppm (0,190 à 0,210 % en poids),
B2 : 1400 à 1600 ppm (0,140 à 0,160 % en poids),
B3 : 1400 à 1600 ppm (0,140 à 0,160 % en poids).

3. Composition de polymère thermoplastique (I) selon la revendication 1 ou 2, dans laquelle le composant B2 est l'acrylate de 2-[1-(2-hydroxy-3,5-di-tert-pentylphényl)éthyl]-4,6-di-tert-pentylphényl.

4. Composition de polymère thermoplastique (I) selon l'une quelconque des revendications 1 à 3, dans laquelle le composant C est le tétrakis[3-[3,5-di-tert-butyl-4-hydroxyphényl] propionate de pentaérythritol.

5. Composition de polymère thermoplastique (I) selon l'une quelconque des revendications 1 à 3, dans laquelle le composant optionnel C n'est pas présent.

6. Composition de polymère thermoplastique (I) selon l'une quelconque des revendications 1 à 5, dans laquelle le copolymère à blocs A comprend (consiste en) :
A1 : 60 à 80 % en poids, de préférence 60 à 76 % en poids, plus de préférence 65 à 76 % en poids, - sur la base du copolymère à blocs A - unités polymérisées d'au moins un monomère vinylaromatique, en particulier le styrène, et
A2 : 20 à 40 % en poids, de préférence 24 à 40 % en poids, plus de préférence 24 à 35 % en poids, - sur la base du copolymère à blocs A - unités polymérisées d'au moins un diène conjugué, en particulier le butadiène ou l'isoprène.

7. Composition de polymère thermoplastique (I) selon l'une quelconque des revendications 1 à 6, dans laquelle le copolymère à blocs A comprend au moins un bloc polymère dur S composé de 95 à 100 % en poids de monomères vinylaromatiques et de 0 à 5 % en poids de diènes conjugués, éventuellement un ou plusieurs blocs de copolymères durs (B/S) composés chacun de diènes conjugués et de monomères vinylaromatiques ayant un rapport B/S (= rapport diène/monomère vinylaromatique) < 0,25, de préférence 0,1 à 0,2, plus de préférence 0,1 à 0,15, et une température de transition vitreuse Tg (ISO 11357-2) > 37 °C, et un ou plusieurs blocs souples B composés de 100 % en poids de diène conjugué et/ou un ou plusieurs blocs de copolymère souples (S/B) composés chacun de monomères vinylaromatiques et de diènes conjugués ayant un rapport S/B (= rapport monomère vinylaromatique/diène) < 0,5, de préférence 0,15 à 0,45, plus de préférence 0,2 à 0,4, et une température de transition vitreuse Tg < 37 °C.

8. Composition de polymère thermoplastique (I) selon la revendication 7, dans laquelle les blocs de copolymère durs et souples (B/S) et (S/B) sont des blocs de copolymère aléatoire.

9. Composition de polymère thermoplastique (I) selon la revendication 7 ou 8 dans laquelle le copolymère à blocs A comprend au moins un bloc dur S composé de 95 à 100 % en poids de monomères vinylaromatiques, de préférence du styrène, et de 0 à 5 % en poids de diènes conjugués, de préférence de l'isoprène et/ou du butadiène, et comprend un ou plusieurs blocs copolymères (B/S)_{A} composés chacun de 65 à 95% en poids de monomères vinylaromatiques, de préférence du styrène, et de 35 à 5% en poids de diènes conjugués, de préférence de l'isoprène et/ou du butadiène, et d'une température de transition vitreuse Tg_{A} comprise entre 40° et 90°C, et comprend un ou plusieurs blocs copolymères (B/S)_{B} composés chacun de 1 à 60 % en poids, de préférence de 1 à 30 % en poids de monomères vinylaromatiques, de préférence du styrène, et de 99 à 40 % en poids, de préférence de 99 à 70 % en poids, de diènes conjugués, de préférence de l'isoprène et/ou du butadiène, et d'une température de transition vitreuse Tg_{B} comprise entre -90° et -40°C, de préférence entre -80° et -65°C.

10. Composition de polymère thermoplastique (I) selon l'une quelconque des revendications 1 à 9, dans laquelle le copolymère à blocs A est un copolymère à blocs en forme d'étoile.

11. Composition de polymère thermoplastique (I) selon la revendication 10, dans laquelle les étoiles du copolymère à blocs A ont :
branches courtes de la structure Sₑ-(B/S)_{B}~ et branches longues de la structure (B/S)_{A}-Sᵢ-(B/S)_{B}~, reliées entre elles par un agent de couplage au moyen des blocs souples (B/S)_{B}, ou
branches courtes de la structure Sₑ-(B/S)_{B}~ et branches longues ches de la structure S_{e'}-(B/S)_{A}-Sᵢ-(B/S)_{B}~, reliées entre elles par un agent de couplage au moyen des blocs souples (B/S)_{B}, ou
des branches courtes de la structure Sₑ-(B/S)_{B}-S_{f}~ et des branches longues de la structure (B/S)_{A}-Si-(B/S)_{B}-S_{f}~, reliées entre elles par un agent de couplage au moyen des blocs S_{f}, ou
branches courtes de la structure Sₑ-(B/S)_{B}-S_{f}~ et branches longues de la structure S_{e'}-(B/S)_{A}-Si-(B/S)_{B}-S_{f}~, reliées entre elles par un agent de couplage au moyen des blocs S_{f},
où Sₑ et Sᵢ sont des blocs S ayant une masse molaire moyenne en nombre (déterminée par chromatographie par perméation de gel dans le THF, en utilisant le polystyrène comme étalon) Mₙ de 5000 à 30000 g/mol, S_{f} et S_{e'} sont des blocs S ayant une Mₙ inférieure à 4000 g/mol, et (B/S)_{A} et (B/S)_{B} sont tels que définis ci-dessus, où Mₙ du bloc (B/S)_{A} est de 30000 à 300000 et Mn du bloc (B/S)_{B} est de 5000 à 50000 g/mol.

12. Composition de polymère thermoplastique (I) selon l'une quelconque des revendications 1 à 11, dans laquelle le polymère thermoplastique TP est au moins un polymère choisi parmi : les polymères du styrène, tels que le copolymère bloc diène vinylaromatique (SBC), le polystyrène standard (GPPS), les copolymères styrène-acrylonitrile (SAN), les copolymères styrène-méthacrylate de méthyle (S/MMA), ou les polyméthacrylates, tels que le PMMA, les polyesters, tels que le polyéthylène téréphtalate (PET), les polyoléfines, telles que le polyéthylène ou le polypropylène, ou le polychlorure de vinyle (PVC), ou les matériaux semi-cristallins, ou les polyacrylates, ou les élastomères thermoplastiques (TPE).

13. Procédé de préparation d'une composition polymère thermoplastique (I) selon l'une quelconque des revendications 1 à 12 qui comprend :
i) polymérisation anionique séquentielle d'une composition de monomères, comprenant
A1 : 60 à 95 % en poids d'au moins un monomère vinylaromatique, de préférence le styrène, et
A2 : 5 à 40 % en poids d'au moins un diène conjugué, de préférence du butadiène, pour obtenir des chaînes de polymères anioniques vivantes ;
ii) ensuite, la terminaison de la chaîne ou le couplage des chaînes de polymères anioniques vivants produites à l'étape i) pour obtenir le copolymère à blocs A, linéaire ou en forme d'étoile ;
iii) ensuite, éventuellement, addition d'alcool, et de CO₂ et d'eau ; et
iv) - après l'étape ii) ou iii) - addition des composants stabilisants (B1), (B2) et (B3) et, le cas échéant, addition des stabilisants (C), des additifs et/ou des auxiliaires technologiques (D) et/ou du composant (E) pour obtenir la composition (I).

14. Procédé de préparation de films rétractables dans lequel une composition de polymère thermoplastique (I) selon l'une quelconque des revendications 1 à 12 est transformée en films par thermoformage, extrusion, moulage par injection, calandrage, moulage par soufflage ou moulage par compression.

15. Film rétractable produit à partir d'une composition de polymère thermoplastique (I) selon l'une quelconque des revendications 1 à 12.

16. Utilisation d'une composition polymère thermoplastique (I) selon l'une quelconque des revendications 1 à 12 pour la production de films, en particulier de films rétractables.
